# DEMANDE DE BREVET EUROPEEN

(11) **EP 2 667 151 A1**
(43) Date de publication de la demande: **27.11.2013**
(21) Numéro de dépôt: 12168774.3
(22) Date de dépôt: 21.05.2012
(51) Int. Cl.: G01B 11/25

(54) **Convertisseur chromatique d'altimétrie**

(71) Demandeur: Sysmelec SA, 3238 Gals (CH)
(72) Inventeur: Burry, Jean-Michel, 01460 Montreal la Cluse (FR); Berger, Leon, 2000 Neuchâtel (CH)
(74) Mandataire: Richard, François-Régis

(57) **Abrégé**

La présente invention concerne un convertisseur chromatique d'altimétrie destiné à réaliser une image réelle et complète d'une zone d'observation prédéfinie de la surface d'un échantillon, représentative de la hauteur locale de cet échantillon, le convertisseur comportant notamment : (i) un dispositif d'illumination de l'échantillon comprenant au moins une source de lumière polychromatique, (ii) un masque permettant de générer simultanément N faisceaux incidents à partir de la lumière polychromatique, chaque faisceau incident définissant l'un des points objets. Le convertisseur est caractérisé par le fait que le dispositif d'illumination est agencé de manière à couvrir à chaque instant l'ensemble de la zone d'observation prédéfinie, tandis que le masque est agencé de telle manière qu'il occulte une portion de la lumière polychromatique pour ne laisser passer que les N faisceaux incidents, ceux-ci définissant les points objets répartis sensiblement dans toute l'étendue de la zone d'observation.

## Description

### Domaine technique

La présente invention est relative au domaine de la numérisation en trois dimensions, en temps réel et sans contact, d'objets fabriqués industriellement ou conçus dans des laboratoires de recherche, et concerne en particulier les appareils optiques dits « confocaux chromatiques ».

Plus précisément, l'invention se rapporte à un convertisseur chromatique d'altimétrie qui génère une image réelle du champ de mesure dans lequel se trouve un échantillon, en convertissant la hauteur locale de sa surface en longueur d'onde.

Le dispositif comprend une source lumineuse polychromatique et un dispositif optique destiné à transformer la lumière émise par la source, en de nombreux faisceaux parallèles polarisés et pourvus de chromatisme essentiellement axial. La réflexion de ces faisceaux sur l'échantillon à étudier est ensuite analysée par un dispositif d'analyse afin de connaître la hauteur locale de la surface de l'échantillon.

### Etat de la technique

Des dispositifs permettant de savoir quelle est la hauteur d'une surface ont déjà été divulgués, par exemple dans le brevet EP 0950168B1. L'appareil présenté numérise des tranches de la surface d'un échantillon, puis effectue une reconstitution tridimensionnelle de la surface à l'aide de moyens informatiques. Pour cela, l'échantillon est éclairé par un faisceau chromatique, et posé sur une platine pouvant être déplacée horizontalement selon des axes x et y. Pour une position y donnée, l'appareil mesure la longueur d'onde réfléchie par la surface pour une série de coordonnées x, ce qui permet d'en déduire la hauteur z de l'échantillon grâce au codage chromatique.

L'inconvénient majeur de cette technique d'analyse réside dans la durée de numérisation d'une image, qui est très longue. Cela est dû à deux facteurs : (i) la mesure qui est réalisée point par point, et (ii) la platine qui doit être bougée au cours des acquisitions.

Le dispositif confocal chromatique présenté dans la demande de brevet FR 2950441A1 permet de mesurer la hauteur d'une surface de manière plus rapide.

Pour cela, plusieurs voies de mesures indépendantes déterminent simultanément la hauteur de plusieurs points de la surface, de sorte qu'une fraction de la zone d'observation est sondée en une seule fois.

Plus précisément, chaque faisceau réfléchi par un point de la surface est dispersé par un dispositif d'analyse spectrale, de façon à ce que chaque spectre obtenu occupe tout ou partie d'une ligne de pixels d'un photodétecteur. Le nombre de points de la surface pouvant être analysés simultanément est donc limité.

A titre d'exemple, le titulaire de ce brevet précise que le dispositif permet de partager un détecteur photoélectrique de 2048 pixels entre 10 voies de mesure.

Pour obtenir la mesure entière de la zone d'observation, un dispositif de balayage interne est ajouté à l'appareil. Ce dispositif consiste par exemple en un miroir tournant qui défléchit les faisceaux issus des voies de mesure vers différents points de la surface de l'échantillon à étudier. Grâce au dispositif de balayage interne, les acquisitions sont réalisées sans déplacer l'échantillon.

Cette méthode de balayage interne dans un dispositif confocal permet d'améliorer la vitesse d'acquisition des mesures, mais de manière insuffisante.

En outre, le fait que chaque voie de mesure soit indépendante engendre une augmentation significative du coût de l'appareil, car les éléments optiques et les dispositifs d'analyse spectrale sont multipliés.

Par ailleurs, le fait de juxtaposer les voies de mesure accroît de façon notable la taille de la machine. Pour limiter cet inconvénient, l'appareil est séparé en deux blocs reliés par des fibres optiques afin d'avoir une tête de mesure de dimensions raisonnables, mais cela ne résout pas pour autant le problème lié à l'encombrement total du dispositif.

Il apparaît de ce qui précède que les systèmes actuels sont peu adaptés aux contraintes industrielles, que ce soit en termes de coût, d'encombrement, et surtout en termes de rapidité d'analyse des échantillons étudiés.

### Divulgation de l'invention

Un but principal de la présente invention est de pallier les inconvénients des dispositifs confocaux chromatiques connus de l'art antérieur, en proposant un convertisseur chromatique d'altimétrie qui permette de réaliser une image réelle et complète d'une zone d'observation prédéfinie de la surface d'un échantillon représentative de la hauteur locale de cet échantillon.

A cet effet, le convertisseur chromatique d'altimétrie selon l'invention comporte :
un dispositif d'illumination de l'échantillon comprenant au moins une source de lumière polychromatique,
un masque comportant une pluralité d'organes de transmission et permettant de générer simultanément N faisceaux incidents à partir de ladite lumière polychromatique, chaque faisceau incident définissant un point objet de l'échantillon,
un dispositif optique destiné à introduire du chromatisme axial dans chacun desdits N faisceaux incidents, suivant une plage donnée de longueurs d'onde, avant que les N faisceaux incidents ne parviennent à la surface de l'échantillon pour être réfléchis en N faisceaux réfléchis respectifs par les points objets correspondants,
au moins un dispositif de polarisation permettant de polariser les N faisceaux incidents et les N faisceaux réfléchis,
un dispositif de filtrage présentant une pluralité de trous de filtrage, N trous de filtrage étant associés aux N faisceaux réfléchis respectifs pour être convertis en des faisceaux filtrés de faible largeur spectrale, destiné à former des taches images constitutives de ladite image réelle,
caractérisé par le fait que le dispositif d'illumination est agencé de manière à couvrir à chaque instant l'ensemble de la zone d'observation prédéfinie, tandis que le masque est agencé de telle manière qu'il occulte une portion de la lumière polychromatique pour ne laisser passer que les N faisceaux incidents, ceux-ci étant répartis sensiblement dans toute l'étendue de ladite zone d'observation.

Par ailleurs, le masque est avantageusement monté mobile pour modifier la position des points objets au cours du temps, pour que ces derniers balayent sensiblement toute la zone d'observation.

Selon un mode de réalisation de l'invention, le masque présente sensiblement la forme d'un disque, et comporte au moins un secteur comprenant les organes de transmission, tandis qu'un masque supplémentaire, de géométrie similaire à celle du premier masque, comporte au moins un secteur comprenant les trous de filtrage du dispositif de filtrage. Dans ce mode de réalisation, les deux masques sont entraînés en rotation à la même vitesse au moyen d'un organe d'entraînement, et agencés de telle manière qu'à chaque instant, un trou de filtrage du masque supplémentaire est associé à l'un faisceau des N faisceaux réfléchis par un point objet de la surface de l'échantillon.

Selon un autre mode de réalisation avantageux, le masque présente sensiblement la forme d'un disque, et porte le dispositif de filtrage, de manière à générer les N faisceaux incidents au moyen des organes de transmission, et à filtrer les N faisceaux réfléchis au moyen des trous de filtrage. Ici, les organes de transmissions et les trous de filtrage sont agencés de telle manière qu'à chaque instant, un trou de filtrage du masque est associé à l'un des N faisceaux réfléchis par un point objet de la surface de l'échantillon.

Selon un mode de réalisation préféré, le masque comporte un nombre pair de secteurs, chaque secteur comprenant des organes de transmission étant associé à un secteur comprenant des trous de filtrage, qui lui est diamétralement opposé.

Par ailleurs, le ou les masque(s) peuvent avantageusement comporter des zones neutres bloquant le passage de la lumière polychromatique.

De manière préférée, les organes de transmission comportent des trous, dits trous sources, de plus grand diamètre que les trous de filtrage.

Selon un mode de réalisation préféré, les N faisceaux incidents sont également filtrés au moyen de N trous de filtrage pour être convertis en des faisceaux spatialement homogènes, avant de parvenir à la surface de l'échantillon.

De cette manière, les trous de filtrage permettent à la fois de maximiser le rapport signal sur bruit des faisceaux incidents, et de limiter la plage de longueurs d'onde des faisceaux réfléchis par la surface.

Selon un mode de réalisation général préféré, le dispositif destiné à introduire du chromatisme axial dans une plage donnée de longueurs d'onde peut aussi être un autocollimateur de Offner dans lequel au moins l'un des deux miroirs est un miroir de Mangin. Un tel dispositif est par exemple décrit dans le brevet US 3,674,334.

Un autocollimateur de Offner est un système optique particulièrement intéressant car il joue le même rôle qu'un objectif tout en étant plus compact et moins coûteux. Par ailleurs, ce type de système n'introduit pas d'aberrations jusqu'au troisième ordre.

Le dispositif destiné à introduire du chromatisme axial peut néanmoins être un objectif classique.

En outre, le convertisseur chromatique d'altimétrie selon l'invention peut comprendre un dispositif de séparation de la lumière, destiné à séparer les flux lumineux des N faisceaux incidents et des N faisceaux réfléchis, pour permettre à la quasi-totalité du flux lumineux des premiers de se propager en direction de ladite surface de l'échantillon et à la quasi-totalité du flux lumineux des seconds de se propager en direction d'un dispositif d'analyse comportant une caméra, le dispositif d'analyse étant agencé pour convertir une longueur d'onde en une hauteur locale du point objet correspondant de la surface de l'échantillon.

De façon avantageuse, la source de lumière polychromatique éclaire le masque de manière séquentielle. De cette manière, le dispositif d'analyse spectrale n'acquiert que des données pertinentes pour l'analyse de l'échantillon.

La caméra est choisie de préférence parmi une caméra trichromatique ou une caméra à couleurs complémentaires. De manière avantageuse, le capteur de la caméra est un capteur CCD, tri-CCD, CMOS ou multiple CMOS.

De manière préférée, le convertisseur chromatique d'altimétrie selon l'invention peut comprendre un second autocollimateur de Offner, dont l'un des deux miroirs est un miroir de Mangin, l'autocollimateur de Offner étant disposé en amont du dispositif destiné à introduire du chromatisme axial, pour corriger les défauts chromatiques générés par le dispositif de séparation de la lumière.

Alternativement, le dispositif optique destiné à corriger les défauts chromatiques des faisceaux incidents peut également être un objectif classique.

Selon un autre aspect de l'invention, le convertisseur chromatique d'altimétrie est monté sur un objectif télécentrique, préférablement bi-télécentrique, pour pouvoir adapter le champ de mesure à la taille de l'objet à observer.

Tous les faisceaux issus d'un objectif télécentrique ou bi-télécentrique présentent l'avantage d'être parallèles à l'axe optique. En revanche selon sa qualité, ce type d'objectif peut générer du chromatisme sur les bords de la zone d'observation, mais une simple calibration préalable aux mesures permet d'y remédier. Pour cela un échantillon de référence peut être utilisé, afin de déterminer la correspondance entre la longueur d'onde des faisceaux réfléchis et la hauteur des points objets correspondants.

Par ailleurs, la profondeur de champ d'un objectif télécentrique ou bi-télécentrique utilisé avec des faisceaux chromatiques est beaucoup plus étendue qu'avec des faisceaux blancs.

Grâce à cette caractéristique particulièrement avantageuse, le convertisseur chromatique d'altimétrie peut non seulement être utilisé pour mesurer la hauteur de la surface d'un échantillon, mais aussi pour mesurer des distances entre différents points de l'échantillon, puisque l'ensemble de la zone d'observation est nette.

De ce fait, l'appareil est très bien adapté pour être utilisé dans l'industrie horlogère pour examiner, par exemple, les finitions des carrures de montre, ou dans l'aéronautique pour contrôler des ailettes de compresseur.

Enfin, la présente invention se rapporte au procédé de réalisation d'une image de la zone d'observation de la surface d'un échantillon utilisant un convertisseur chromatique d'altimétrie selon l'invention.

### Brève description des dessins

D'autres caractéristiques et avantages de la présente invention apparaîtront plus clairement à la lecture de la description détaillée d'un mode de réalisation préféré qui suit, faite en référence aux dessins annexés donnés à titre d'exemples non limitatifs et dans lesquels:

- la figure 1a représente une vue de face simplifiée d'un convertisseur chromatique d'altimétrie selon un premier mode de réalisation ;

- la figure 1b représente une vue en perspective simplifiée d'un convertisseur chromatique d'altimétrie monté sur un objectif télécentrique;

- la figure 2 représente une vue de face simplifiée du masque selon le premier mode de réalisation de l'invention ;
- la figure 3 représente un exemple de sensibilité spectrale d'une caméra du dispositif d'analyse spectrale selon l'invention, ainsi qu'un exemple de pic spectral typiquement reçu par un pixel de la caméra.

### Mode(s) de réalisation de l'invention

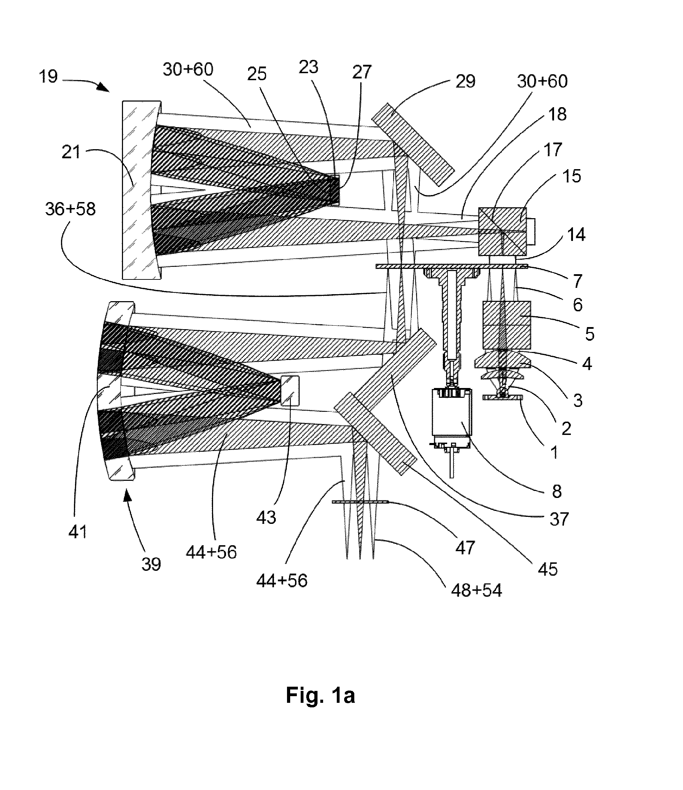

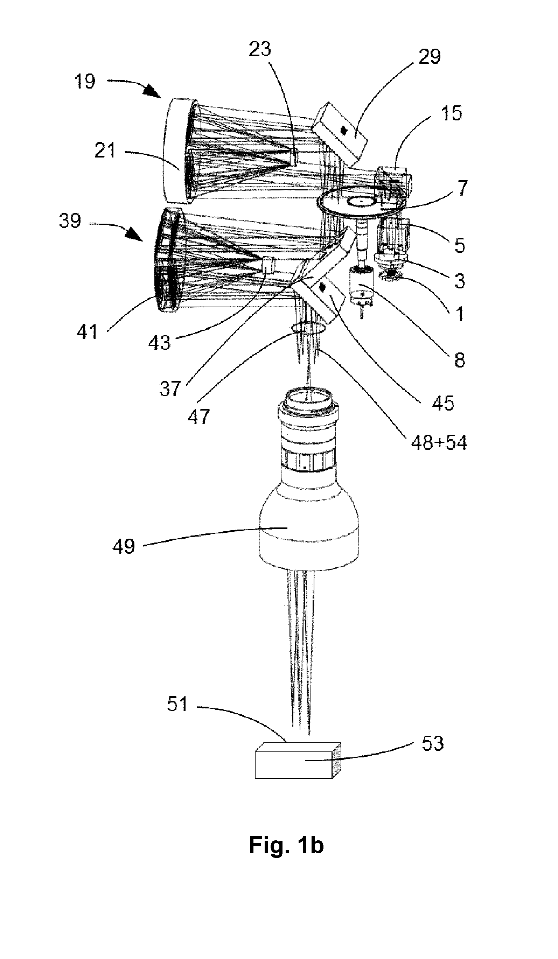

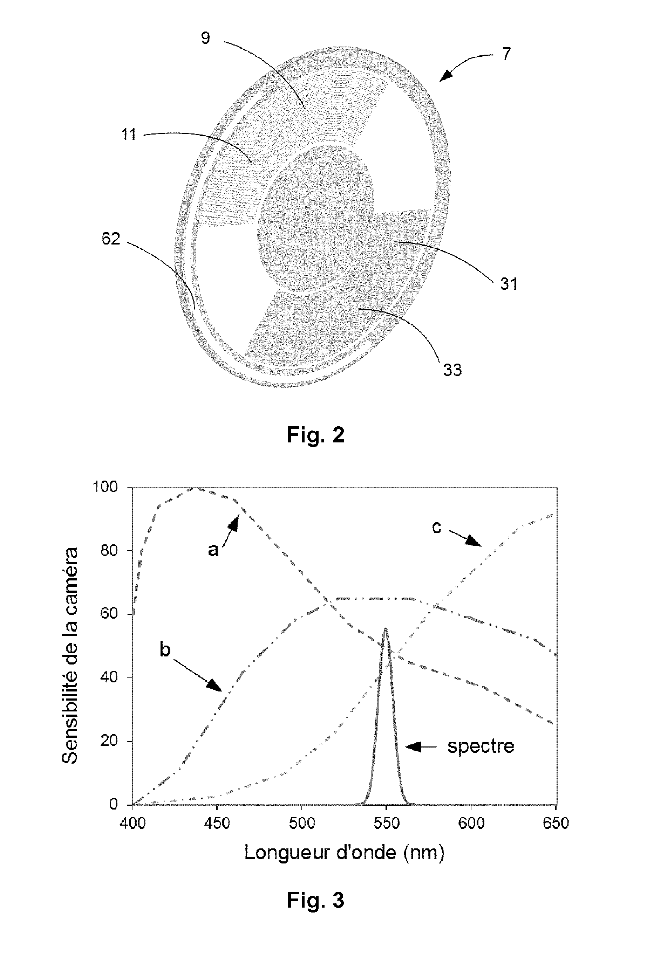

Selon un premier mode de réalisation illustré par les figures 1 et 2, une source lumineuse 1, par exemple une LED blanche, émet un faisceau de lumière polychromatique non polarisée 2, qui traverse un jeu de lentilles 3. Celles-ci jouent le rôle de condenseur et sont destinées à uniformiser l'intensité du faisceau lumineux. A la sortie des lentilles 3, le faisceau 4 est sensiblement uniforme et parallèle, et mesure quelques centimètres de diamètre.

Le système optique utilisé pour obtenir un faisceau parallèle et uniforme est un dispositif classique utilisé dans les appareils tels que les microscopes. L'homme du métier peut facilement l'adapter à ses besoins sans sortir du cadre de l'invention.

Le faisceau 4 traverse ensuite un cube polarisant 5 et adopte une polarisation rectiligne, puis atteint un masque 7 entraîné en rotation par un moteur 8. Plus précisément, le faisceau polarisé 6 arrive sur le masque tournant 7 dans un secteur 9 et éclaire N trous simultanément. Ces trous sont appelés trous sources 11, et par exemple agencés en portions de spirales concentriques.

Les trous sont qualifiés de trous sources car ils sont considérés comme autant de sources ponctuelles de lumière polychromatique polarisée rectilignement. La lumière traversant les trous est diffractée et la section de chaque faisceau incident présente un disque central et des cercles concentriques de plus en plus atténués.

Par ailleurs, les trous source 11 ont un diamètre de l'ordre de quelques dizaines de microns, préférentiellement d'une trentaine de microns, pour une ouverture du système optique de f/8.

De plus, la distance séparant deux trous 11 voisins est de l'ordre de 15 à 50 fois plus grande que le diamètre des trous source. De cette façon, les faisceaux incidents n'interfèrent pas entre eux.

On notera aussi que le moteur 8 entraîne le masque 7 à une fréquence de rotation de l'ordre de quelques dizaines de Hertz, voire d'une centaine de Hertz. Cette fréquence est avantageusement liée à la fréquence d'acquisition des données, comme cela sera exposé plus loin.

Par ailleurs, il est important de noter qu'étant donné que le masque 7 est mobile en rotation, les N trous source 11 éclairés par le faisceau 4 sont différents à chaque instant, de sorte que la position des N points objets éclairés par les N faisceaux incidents 14 change au cours du temps.

En sortie de masque, les N faisceaux incidents 14, polarisés rectilignement et divergents, atteignent un cube séparateur de polarisation 15 avec lame séparatrice dichroïque 17. Le cube 15 est agencé dans le montage optique de manière telle que les faisceaux atteignent la lame 17 en ayant un angle d'incidence de 45°.

De manière classique, un tel cube est prévu pour réfléchir la quasi-totalité du flux lumineux d'un faisceau polarisé selon un axe de polarisation prédéfini (polarisation P), et pour transmettre la quasi-totalité du flux lumineux d'un faisceau polarisé perpendiculairement (polarisation S). Ici le cube 15 réfléchit la quasi-totalité du flux lumineux des faisceaux incidents 14, et transmet la quasi-totalité du flux lumineux des faisceaux réfléchis, comme on le verra par la suite.

Généralement, une lame séparatrice dichroïque introduit des défauts chromatiques. Il en résulte que les faisceaux 18 réfléchis par la lame 17 ne sont plus des faisceaux parfaitement blancs.

Pour résoudre ce problème, un autocollimateur de Offner modifié 19 est placé dans le montage optique.

Celui-ci est composé d'un miroir sphérique principal 21 et d'un miroir secondaire 23, lui aussi sphérique. De manière classique, le miroir 21 est argenté sur sa face avant, c'est-à-dire sur la face concave. En revanche le miroir 23 est un miroir de Mangin, et possède donc la particularité d'être argenté sur sa face arrière. En l'occurrence, sa face réfléchissante n'est pas sa face hyperbolique 25 mais sa face plane 27.

Le fait d'utiliser un miroir de Mangin en tant que miroir secondaire permet de corriger le chromatisme introduit par la lame séparatrice dichroïque, de façon à ce qu'à la sortie de l'autocollimateur de Offner, les faisceaux incidents soient des faisceaux blancs.

Comme dans tous les autocollimateurs de Offner, le montage est afocal, c'est-à-dire que le miroir secondaire 23 coïncide avec le foyer du miroir principal 21. De cette façon, tous les faisceaux parallèles à l'axe optique du miroir principal 21 sont dirigés vers le miroir secondaire 23.

En ce qui concerne l'invention, les faisceaux incidents 18, polarisés, légèrement chromatiques et divergents, sont réfléchis une première fois sur le miroir principal 21 en direction du miroir secondaire 23. Celui-ci renvoie les faisceaux incidents en direction du miroir principal 21, qui les renvoie en direction d'un miroir plan 29, placé de telle sorte que les axes des faisceaux aient un angle d'incidence de 45°. Le miroir 29 réfléchit alors les faisceaux incidents 30, polarisés, blancs et convergents, en direction du masque 7.

De façon classique, les miroirs 21 et 23 sont agencés de sorte que le grandissement de l'autocollimateur de Offner 19 soit égal à -1. En conséquence, chaque faisceau parvient sur le masque 7, en un point diamétralement opposé au trou source 11 dont il provient.

Par ailleurs, les positions de l'autocollimateur de Offner 19 ainsi que du miroir plan 29 sont étudiées pour que la distance parcourue par la lumière entre les trous sources 11 du masque 7 et le miroir secondaire 23, lorsque les faisceaux incidents sont divergents, soit identique à celle parcourue entre le miroir secondaire 23 et le masque 7, lorsque les faisceaux incidents sont convergents. De cette manière l'image des trous source est contenue dans le plan du masque 7.

Après avoir été réfléchis sur le miroir 29, les faisceaux incidents 30 arrivent sur le masque 7, plus précisément sur un secteur 31 comportant des trous, dits trous de filtrage 33, agencés en portions de spirales concentriques. Chaque trou de filtrage 33 est diamétralement opposé à un trou source 11, de sorte que la lumière issue d'un trou source repasse dans le trou de filtrage qui lui est associé.

Les trous de filtrage 33 ont un diamètre plus petit que celui des trous sources 11. Le diamètre est choisi pour être sensiblement égal au diamètre de la tâche d'Airy d'un faisceau éclairant un trou source du masque, qui serait monochromatique, et dont la longueur d'onde correspondrait à la longueur d'onde moyenne de la source lumineuse. Dans ce mode de réalisation, cela correspond à un diamètre de l'ordre de 7 à 10 µm.

Grâce aux trous de filtrage 33, les cercles concentriques situés en périphérie des faisceaux incidents 30 sont arrêtés par le masque. En conséquence le rapport signal sur bruit augmente, ce qui permet d'améliorer la précision des mesures.

A la sortie du masque 7, les faisceaux incidents 36, polarisés et filtrés, redeviennent divergents avec une ouverture du système optique identique à celle de départ, c'est-à-dire de f/8.

Ceux-ci arrivent sur un miroir plan 37 avec un angle d'incidence de 45° par rapport à celui-ci. Les faisceaux incidents 36 sont réfléchis en direction d'un second autocollimateur de Offner 39 dont les miroirs principal 41 et secondaire 43 sont des miroirs de Mangin.

Le miroir principal 41 présente la spécificité d'être très épais, pour introduire du chromatisme axial sur une plage étendue de longueurs d'onde. Ainsi, les faisceaux incidents blancs 36 deviennent des faisceaux chromatiques après avoir traversé l'autocollimateur de Offner.

A la sortie de ce second autocollimateur de Offner, les faisceaux incidents 44 sont réfléchis par un miroir plan 45 incliné à 45° puis traversent une lame quart d'onde achromatique 47.

La lame quart d'onde achromatique 47 a pour effet de transformer la polarisation rectiligne des faisceaux incidents 44 en polarisation circulaire, sans introduire de chromatisme supplémentaire.

L'ensemble du convertisseur chromatique d'altimétrie est monté sur un objectif 49. Celui-ci peut être un objectif télécentrique ou bi-télécentrique. Le choix de l'objectif dépend de la taille de l'objet à analyser. Plus l'objet est grand, plus le champ de mesure doit être étendu, et donc plus le grandissement de l'objectif doit être élevé. Les objectifs 62-902, 62-912 et 62-922 de la marque Edmund Optics, ou S5LPJ7208 ou S5LPJ1555 de la marque Silloptics sont typiquement des objectifs pouvant être utilisés en association avec le convertisseur chromatique d'altimétrie selon l'invention.

On remarquera que l'objectif 49 voit sa profondeur de champ augmenter notablement. Pour une profondeur de champ théorique de l'ordre de 2 µm, celle-ci peut atteindre la centaine de microns avec des faisceaux chromatiques tels que ceux générés par le convertisseur chromatique d'altimétrie selon l'invention.

Les faisceaux incidents 48, chromatiques et polarisés circulairement, traversent donc l'objectif 49 puis se réfléchissent sur la surface 51 d'un échantillon 53, placé dans le champ de mesure de l'appareil.

Conformément au principe des confocaux chromatiques classiques, les faisceaux incidents 48 convergent selon une profondeur de champ étendue, chaque longueur d'onde du faisceau convergeant à une altitude qui lui est propre.

Grâce à cette spécificité, chaque faisceau réfléchi 54 comporte une partie centrale très brillante, monochromatique, dont la largeur est inférieure ou égale à celle du trou de filtrage, et un halo polychromatique qui entoure la partie centrale.

Il est important de noter que, si les faisceaux incidents 48 ont une polarisation circulaire gauche, les faisceaux réfléchis 54 ont une polarisation circulaire droite, et vice-versa. De cette façon, les faisceaux incidents 48 et réfléchis 54 n'interfèrent pas entre eux.

Par la suite, lorsque les faisceaux réfléchis 54 traversent la lame quart d'onde 47, leur polarisation circulaire est transformée en polarisation rectiligne. Leur axe de polarisation est orthogonal à l'axe de polarisation des faisceaux incidents 48, de sorte qu'ils n'interfèrent toujours pas.

Les faisceaux réfléchis 56, polarisés rectilignement, traversent ensuite l'autocollimateur de Offner 39, qui introduit un chromatisme supplémentaire, calibré au préalable.

En arrivant sur les trous de filtrage 33 du masque 7, chaque faisceau 58 réfléchi est filtré. Seule la composante du faisceau dont la longueur d'onde converge dans le plan du masque 7 peut passer à travers le trou, c'est-à-dire la partie centrale très brillante. Le halo polychromatique est filtré en quasi-totalité par la paroi du masque. Il en résulte que la largeur spectrale de chaque faisceau réfléchi 60 est extrêmement faible.

Les faisceaux réfléchis 60, quasi-monochromatiques et polarisés rectilignement, traversent ensuite l'autocollimateur de Offner modifié 19, puis le cube polarisant 15, de sorte que leurs répartitions spectrales restent inchangées. En effet, comme nous l'avions précisé auparavant, l'autocollimateur de Offner modifié 19 est conçu pour compenser les défauts chromatiques générés par le cube polarisant 15.

Par ailleurs, la quasi-totalité du flux lumineux parvenant sur le cube polarisant 15 est transmis en direction d'un dispositif d'analyse spectrale. Seule une infime partie de l'intensité est réfléchie vers le masque 7. Cela est dû au fait que le cube réfléchit les ondes polarisées selon un axe, et transmet celles polarisées selon un axe orthogonal.

Le dispositif d'analyse spectrale (non représenté) comprend une caméra, par exemple, une caméra à couleurs complémentaires, telle que la caméra industrielle Basler Ace GigE acA750-30gc, ou une caméra trichromatique telle que la caméra industrielle Basler Ace GigE acA2500-14gc ou Foveon X3 Pro 10M CMOS Direct Image Sensor.

Ces caméras trichromatiques présentent notamment la particularité d'être sensibles dans le rouge et le bleu autour d'une longueur d'onde de 550nm, ce qui permet d'augmenter la qualité des mesures.

A cet effet la figure 3 représente la résolution spectrale de ce type de caméra. La courbe désignée par la lettre a correspond à la sensibilité de la caméra dans le bleu, la courbe désignée par la lettre b représente la sensibilité dans le rouge, et enfin la courbe désignée par la lettre c montre la sensibilité dans le vert.

La résolution typique des caméras utilisées est de l'ordre de quelques Méga pixels, plus précisément de 4 à 5 Méga pixels, pour une surface photosensible de quelques dizaines de millimètres, typiquement de 20 mm x 14 mm. De cette manière, dans ce premier mode de réalisation, la taille des pixels de la caméra est sensiblement égale à la réponse percussionnelle du système optique, c'est-à-dire à la taille des trous de filtrage 33.

Compte tenu des valeurs caractéristiques du type de caméra utilisée, ainsi que des valeurs caractéristiques des trous de filtrage (8 µm de diamètre), et de la distance séparant deux trous de filtrage (15 fois le diamètre d'un trou = 120 µm), on notera qu'environ 20000 taches images éclairent simultanément la surface photosensible de la caméra.

Par ailleurs, le choix de la résolution de la caméra est un facteur important pour l'analyse de la surface 51 de l'échantillon 53. Dans la mesure du possible, le convertisseur chromatique d'altimétrie est agencé pour qu'au cours de l'acquisition d'une image, chaque pixel de la caméra reçoive l'intensité lumineuse d'au moins un faisceau réfléchi.

On notera que si la caméra a une résolution supérieure au nombre total de faisceaux secondaires réfléchis, l'information chromatique est alors moyennée sur chaque zone de pixels du capteur de la caméra, qui est éclairée par un même faisceau réfléchi.

Il est aussi important de souligner que, dans ce mode de réalisation, les trous sources 11 et les trous de filtrage 33 ne sont pas présents sur toute la superficie du masque 7, et donc les données acquises par le dispositif d'analyse spectrale ne sont pas toutes pertinentes.

Ici, le masque tournant comprend des trous sources 11 répartis sur une surface du masque de l'ordre de 25%, et des trous de filtrage également répartis sur une surface de l'ordre de 25%. Une possibilité parmi d'autre est donc d'éclairer le masque de manière séquentielle, par exemple en introduisant un obturateur (non représenté) devant la source lumineuse 1, lorsque cette dernière n'éclaire pas le secteur 9 sur lequel les trous sources 11 sont répartis.

Alternativement, on peut aussi choisir de commander la source lumineuse 1 de telle manière qu'elle soit éteinte lorsqu'elle n'éclaire pas les trous sources 11.

Un dispositif de commande de l'éclairage séquentiel du masque comprend par exemple un laser (non représenté) placé en amont du masque à proximité de la source lumineuse, et un capteur (non représenté) placé en aval du masque 7. Le faisceau passe périodiquement à travers un évidement semi-circulaire 62 du masque, de telle sorte que l'intensité lumineuse reçue par le capteur permet de savoir à quel instant l'obturateur doit être placé devant la source lumineuse 1, ou à quel instant celle-ci doit être allumée ou éteinte.

Un tel dispositif de commande d'un obturateur ou d'une source lumineuse est classique et l'homme du métier pourra facilement l'adapter à ses besoins.

Par ailleurs, lors de l'acquisition des images par la caméra, le masque 7 effectue un certain nombre de tours complets. Ainsi, plus le nombre de tour effectué est grand, plus l'intensité lumineuse reçue par les pixels de la caméra est élevée.

Alternativement, compte tenu de la géométrie du masque tournant 7, une autre méthode d'acquisition peut consister à choisir la fréquence de rotation du masque de façon à ce qu'elle soit quatre fois plus faible que celle de la caméra. De cette manière, le dispositif d'analyse spectrale est configuré pour ne prendre en compte qu'une image acquise sur quatre, c'est-à-dire uniquement les images formées par les faisceaux réfléchis issus des trous de filtrage.

Une autre méthode de traitement peut consister à acquérir des images de manière séquentielle. Par exemple, pour une fréquence d'acquisition de la caméra de 100 Hz et une fréquence de rotation du masque de 25 Hz, une image peut être acquise en 10 ms toutes les 40 ms.

Finalement, chaque pixel de la caméra reçoit une information spectrale sous forme de pic tel que présenté à la figure 3. Connaissant la longueur d'onde du maximum du pic spectral, on peut en déduire la hauteur locale de la surface 51, dans chaque zone éclairée par un faisceau incident, et reconstituer la topographie de l'échantillon 53.

La description qui précède s'attache à décrire un mode de réalisation particulier à titre d'illustration non limitative, et l'invention n'est pas limitée à certaines caractéristiques particulières qui viennent d'être décrites. De nombreux autres modes de réalisation pourraient être envisagés sans sortir du cadre de l'invention.

Notamment, les moyens présentés pour polariser et séparer le faisceau incident ne sont pas limitatifs et l'homme du métier ne rencontrera pas de difficulté particulière pour les adapter en fonction de ses propres besoins.

Le cube séparateur peut en particulier être utilisé pour transmettre la quasi-totalité du flux lumineux des faisceaux incidents, et réfléchir la quasi-totalité du flux lumineux des faisceaux réfléchis.

En outre, pour obtenir des données exploitables, l'éclairage séquentiel du masque peut être remplacé par une configuration du dispositif d'analyse spectrale permettant de sélectionner les images acquises, ou d'acquérir des images de manière séquentielle.

## Revendications

1. Convertisseur chromatique d'altimétrie destiné à réaliser une image réelle et complète d'une zone d'observation prédéfinie de la surface d'un échantillon représentative de la hauteur locale de cet échantillon, le convertisseur comportant :
un dispositif d'illumination de l'échantillon comprenant au moins une source de lumière polychromatique,
un masque comportant une pluralité d'organes de transmission et permettant de générer simultanément N faisceaux incidents à partir de ladite lumière polychromatique, chaque faisceau incident définissant un point objet dudit échantillon,
un dispositif optique destiné à introduire du chromatisme axial dans chacun desdits N faisceaux incidents, suivant une plage donnée de longueurs d'onde, avant que lesdits N faisceaux incidents ne parviennent à la surface de l'échantillon pour être réfléchis en N faisceaux réfléchis respectifs par lesdits points objets correspondants,
au moins un dispositif de polarisation permettant de polariser lesdits N faisceaux incidents et lesdits N faisceaux réfléchis,
un dispositif de filtrage présentant au moins N trous de filtrage associés auxdits N faisceaux réfléchis respectifs pour convertir en des faisceaux filtrés de faible largeur spectrale, destinés à former des taches images constitutives de ladite image réelle,
**caractérisé en ce que** ledit dispositif d'illumination est agencé de manière à couvrir à chaque instant l'ensemble de ladite zone d'observation prédéfinie, tandis que ledit masque est agencé de telle manière qu'il occulte une portion de ladite lumière polychromatique pour ne laisser passer que lesdits N faisceaux incidents, ceux-ci étant répartis sensiblement dans toute l'étendue de ladite zone d'observation.

2. Convertisseur chromatique d'altimétrie selon la revendication 1, **caractérisé en ce que** le masque est monté mobile pour modifier la position desdits points objets au cours du temps, pour que ces derniers balayent sensiblement toute la zone d'observation.

3. Convertisseur chromatique d'altimétrie selon l'une quelconque des revendications précédentes, **caractérisé en ce que**
ledit masque présente sensiblement la forme d'un disque, et comporte au moins un secteur comprenant lesdits organes de transmission,
et **en ce qu'**un masque supplémentaire, de géométrie similaire à celle du premier masque, comporte au moins un secteur comprenant lesdits trous de filtrage dudit dispositif de filtrage,
les deux masques étant entraînés en rotation à la même vitesse, au moyen d'un organe d'entraînement, et agencés de telle manière qu'à chaque instant, un trou de filtrage dudit masque supplémentaire est associé à l'un desdits N faisceaux réfléchis par un point objet de ladite surface dudit échantillon.

4. Convertisseur chromatique d'altimétrie selon l'une quelconque des revendications 1 ou 2, **caractérisé en ce que**
ledit masque présente sensiblement la forme d'un disque, et porte également ledit dispositif de filtrage,
lesdits organes de transmission et lesdits trous de filtrage étant agencés les uns relativement aux autres de telle manière qu'à chaque instant, un trou de filtrage dudit masque est associé à l'un desdits N faisceaux réfléchis par un point objet de ladite surface dudit échantillon.

5. Convertisseur chromatique d'altimétrie selon la revendication 4, **caractérisé en ce que** ledit masque comporte un nombre pair de secteurs, chaque secteur comprenant des organes de transmission étant associé à un secteur comprenant des trous de filtrage, qui lui est diamétralement opposé.

6. Convertisseur chromatique d'altimétrie selon l'une quelconque des revendications précédentes, **caractérisé en ce que** ledit ou lesdits masque(s) comporte(nt) des zones neutres bloquant le passage de ladite lumière polychromatique.

7. Convertisseur chromatique d'altimétrie selon l'une quelconque des revendications précédentes, **caractérisé en ce que** lesdits organes de transmission comportent des trous, dits trous sources, de plus grand diamètre que lesdits trous de filtrage.

8. Convertisseur chromatique d'altimétrie selon la revendication 7, **caractérisé en ce que** lesdits N faisceaux incidents sont également filtrés au moyens desdits trous de filtrage pour être convertis en des faisceaux spatialement homogènes, avant de parvenir à la surface dudit échantillon.

9. Convertisseur chromatique d'altimétrie selon l'une quelconque des revendications précédentes, **caractérisé en ce que** ledit dispositif optique destiné à introduire du chromatisme axial est un autocollimateur de Offner dans lequel les miroirs sont des miroirs de Mangin.

10. Convertisseur chromatique d'altimétrie selon l'une quelconque des revendications 1 à 8, **caractérisé en ce que** ledit dispositif optique destiné à introduire du chromatisme axial est un objectif.

11. Convertisseur chromatique d'altimétrie selon l'une quelconque des revendications précédentes, **caractérisé en ce que** ladite source de lumière polychromatique éclaire ledit masque de manière séquentielle.

12. Convertisseur chromatique d'altimétrie selon l'une quelconque des revendications précédentes, **caractérisé en ce qu'**il comprend en outre un dispositif de séparation de la lumière, destiné à séparer les flux lumineux desdits N faisceaux incidents et desdits N faisceaux réfléchis, pour permettre à la quasi-totalité du flux lumineux des premiers de se propager en direction de ladite surface de l'échantillon et à la quasi-totalité du flux lumineux des seconds de se propager en direction d'un dispositif d'analyse comportant une caméra, ledit dispositif d'analyse étant agencé pour convertir une longueur d'onde en une hauteur locale du point objet correspondant de la surface de l'échantillon.

13. Convertisseur chromatique d'altimétrie selon la revendication 12, **caractérisé en ce que** ladite caméra est une caméra trichomatique ou à couleurs complémentaires.

14. Convertisseur chromatique d'altimétrie selon l'une quelconque des revendications 12 ou 13, **caractérisé en ce qu'**un second autocollimateur de Offner dont l'un des deux miroirs est un miroir de Mangin est disposé en amont dudit dispositif destiné à introduire du chromatisme axial, pour corriger les défauts chromatiques générés par ledit dispositif de séparation de la lumière.

15. Convertisseur chromatique d'altimétrie selon l'une quelconque des revendications précédentes, **caractérisé en ce qu'**il est monté sur un objectif télécentrique, préférablement bi-télécentrique.

16. Procédé de réalisation d'une image réelle d'une zone d'observation prédéfinie de la surface d'un échantillon représentative de la hauteur locale de cet échantillon, par la mise en oeuvre d'un convertisseur chromatique d'altimétrie, comportant les étapes consistant à :
- mettre en oeuvre un dispositif d'illumination de l'échantillon comprenant au moins une source de lumière polychromatique,
- diviser ladite lumière polychromatique en générant simultanément, à l'aide d'un masque, N faisceaux incidents à partir de ladite lumière polychromatique, chaque faisceau incident définissant l'un desdits points objets,
- introduire du chromatisme axial dans chacun desdits N faisceaux incidents, suivant une plage donnée de longueurs d'onde, avant que lesdits N faisceaux incidents ne parviennent à la surface de l'échantillon pour être réfléchis en N faisceaux réfléchis respectifs par lesdits points objets correspondants,
- polariser lesdits N faisceaux incidents et lesdits N faisceaux réfléchis,
- filtrer lesdits N faisceaux réfléchis pour les convertir en des faisceaux filtrés de faible largeur spectrale, destinés à former des taches images constitutives de ladite image réelle,
**caractérisé en ce que** ledit dispositif d'illumination est mis en oeuvre de manière à couvrir à chaque instant l'ensemble de ladite zone d'observation prédéfinie, tandis que l'étape de division mise en oeuvre par le masque permet d'occulter une portion de ladite lumière polychromatique pour ne laisser passer que lesdits N faisceaux incidents, ceux-ci étant répartis sensiblement dans toute l'étendue de ladite zone d'observation.
